# EUROPEAN PATENT SPECIFICATION

(11) **EP 2 298 702 B1**
(45) Date of publication and mention of the grant of the patent: **08.01.2014**
(21) Application number: 10175259.0
(22) Date of filing: 03.09.2010
(51) Int. Cl.: C02F 1/00, C02F 1/68, C02F 1/76

(54) **Water purification device and process for purification of water by this device**
Wasseraufbereitungsvorrichtung und Verfahren zur Wasseraufbereitung mit dieser Vorrichtung
Dispositif de purification d'eau et procédé de purification d'eau avec ce dispositif

(30) Priority: 17.09.2009 IN MU21262009
(43) Date of publication of application: 23.03.2011
(73) Proprietor: Unilever N.V., 3013 AL Rotterdam (NL); Unilever PLC, A Company Registered in England and Wales under Company no. 41424, London, Greater London EC4Y 0DY (GB)
(72) Inventor: Chatterjee, Jaideep, 560 066 Bangalore (IN); Gupta, Santosh Kumar, 560 066 Bangalore (IN); Ramachandran, Rajeesh Kumar, 560 066 Bangalore (IN); Pratap, Shailendra, 560 066 Bangalore (IN); Waskar, Morris, 560 066 Bangalore (IN); Kushwaha, Priyanka, 560 066 Bangalore (IN)
(74) Representative: Rosen Jacobson, Frans Lucas M.

(56) References cited:
- WO-A1-2008/083896

## Description

### Technical field:

The present invention relates to a water purification device and a process for water purification and in particular relates to a water purification device that may be used as a gravity fed system or adapted to be connected to the main water supply.

The invention has been developed primarily for use in drinking water application and will be described hereinafter with reference to this application. However, it will be appreciated that the invention is not limited to this particular field of use.

### Background and Prior Art:

Any discussion of the prior art throughout the specification should in no way be considered as an admission that such prior art is widely known or forms part of the common general knowledge in the field.

A large population of people in the world live in countries where there is a severe shortage of hygienic potable water. People have to depend directly on ground water sources like wells, ponds and rivers. Often these water sources are contaminated by sewage, industrial effluents and agricultural by-products like pesticide residues. For water to be microbially safe, WHO recommends 6 log removal of bacteria, 4 log removal of virus and 3 log removal of cysts. Whilst bacteria and virus removal to the required extent is possible by using chemical disinfection (e.g. by contacting with halogen) or radiation-based disinfection (e.g. by exposure to ultraviolet radiation), these disinfection methods do not achieve 3 log removal of cysts.

Gravity fed devices are available where it is possible to achieve 6 log removal of bacteria, 4 log removal of virus and 3 log removal of cysts using filtration in combination with biocide action. Gravity fed devices function in the absence of pressurised and running water.

WO 2005095284 (Unilever, 2005), discloses a gravity fed water purification system comprising a filtration unit adapted to separate particulate and soluble material from the input water and this is in the form of a carbon block and usually has an additional non-woven fabric filter, a chemical dispensing unit such that flow rate of water exiting the filtration unit is controlled by a flow control means before the water encounters a biocide dispensed by the chemical dispensing unit, the water thereafter being retained in a retention chamber for a predetermined period of time before exiting the water purification system through a scavenger means adapted to separate the dispensed biocide and its by-products from the exit water. This device is quite complex having a number of replaceable parts

WO07000238 (Unilever, 2007), discloses a water purification device comprising an upper and a lower chamber comprising an outlet means for collecting purified water and a filter medium for removing suspended particulates and dissolved organics. The biocide system integral with it is a device which may dispense a unit dose of biocide and water may be fed into a chamber where the biocide could be dispensed. This designed only for a solid biocide and can not be adopted for a liquid biocide. The disadvantage with solid biocides is that they degrade on exposure to air.

WO08083896 (Unilever, 2008) discloses a gravity fed water purification device which may incorporate controlled dosing of a liquid biocide. The device uses a dosing passage comprising a venturi where a top chamber is in fluid communication with a bottom chamber, and water may flow from the top chamber to the bottom chamber. The water in this system has to flow at a high flow rate and the dosing rate depends on the rate of flow of water. Dosing of the biocide is caused by a negative (suction) pressure at the discharge end of the liquid dosing tube, which is caused by water flowing through a venturi, which is connected to the discharge end of the tube in an air-tight manner. The air pressure in the compartment containing the liquid biocide, in this case, is at atmospheric pressure, which is "sucked" out of the biocide containing compartment by the negative pressure at its discharge end. In practice, the venturi based dosing system is highly sensitive to the physical dimensions, and control of dosage is more difficult. The system requires a lot of material for construction thus making it expensive.

The present inventors have been able to design a novel biocide dosing system which is due to a positive pressure created inside the biocide dosing compartment. This dosing system is significantly less sensitive to physical dimensions allowing for improved control of biocide dosage. In addition the narrow venturi as used in the prior art get clogged due to poor quality input water, the risk of which is eliminated in the dosing system disclosed in the present invention.

It has now been possible to develop a single chamber water purification device which is capable of dosing a controlled level of a biocide to the water and provide a filtration unit that functions as a filter-cum-scavenger. This water purification device provides several advantages over the prior art especially in terms of reducing the complexity of the device thus making it economical and reducing the number of replaceable parts without affecting the performance in terms of microbial safety or flow rate. Another advantage of the system is that it can be adapted for use with solid and liquid biocides.

It is an object of the present invention to overcome or ameliorate at least one of the disadvantages of the prior art.

The object of the present invention is to provide a water purification device which is less complex and thus making it economical in its construction.

Another object of the present invention to provide a water purification device with reduced number of replaceable parts and thus making it economical in its construction.

Another object of the present invention is to provide a water purification device that can be adapted to use both solid and liquid biocides.

Another object of the present invention is to provide a water purification device that can be used as a gravity fed device as well as adapted to be used in inline systems.

### Summary of the invention:

According to the present invention there is provided a water purification device comprising:
i. a water purification chamber comprising a fill cup provided with an inlet port and with a porthole, said fill cup positioned at the top end of the water purification chamber is in fluid communication through the port hole with the water purification chamber;
ii. a positive air pressure created in the tube connecting the fill cup and biocide dispensing box that is in fluid communication with biocide storage compartment and a biocide dispensing port causes the biocide to be dispensed from the biocide dispensing box through the biocide dispensing port into the water purification chamber, and said water purification chamber is in fluid communication through a filter with a pure water discharge chamber comprising a water discharge mechanism.

According to another aspect of the present invention there is provided a process for purification of water comprising:
i. filling water into fill cup with a porthole to create an air pressure in the tube;
ii. discharging the liquid biocide from the biocide dispensing box into the water purification chamber;
iii. creating an air pressure in the pure water discharge chamber by actuating the discharge mechanism;
such that the water from the water purification chamber after passing through the filter collects in the pure water discharge chamber.

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

### Brief description of the figures:

Figure 1 is an embodiment of the water purification device according to the invention.
Figure 2 is another embodiment of the water purification device according to the invention showing bellows as the discharging mechanism.
Figure 3 is yet another preferred embodiment of the purification device according to the invention.
Figure 4 is yet another preferred embodiment of the purification device according to the invention provided with a siphon mechanism.

### Detailed Description of the invention:

Thus the present invention provides for a water purification device comprising:
i. a water purification chamber comprising a fill cup provided with an inlet port and with a porthole, said fill cup positioned at the top end of the water purification chamber is in fluid communication through the port hole with the water purification chamber;
ii. a positive air pressure created in the tube connecting the fill cup and biocide dispensing box that is in fluid communication with biocide storage compartment and a biocide dispensing port causes the biocide to be dispensed from the biocide dispensing box through the biocide dispensing port into the water purification chamber, and said water purification chamber is in fluid communication through a filter with a pure water discharge chamber comprising a water discharge mechanism.

The biocide may be provided as a solid or a liquid form. When it is in the solid form the device is designed to dissolve right amount of the solid to provide the correct quantity of liquid biocide in the biocide dispensing box. The biocide is preferably selected from any halogen releasing compounds and preferably chlorine releasing biocide including chlorinated trisodium phosphate, Sodium or Potassium or calcium hypochlorite, the various N-chlorinated compounds known in the art to release active chlorine such as sodium or potassium dichloroisocyanurate, trichlorocyanuric acid, monochloramine, dichloramine, [(monotrichloro)- tetra(monopotassium dichloro)] pentaisocyanurate, 1,3-dichloro-5,5-dimethylidanotone, Chloramine T, p-toluene-sulfodichloroamide, thrichloromelamine, N-chloramine, N-chlorosuccinimide, N,N'- dichloroazodicarbonamide, N-chloroacetyl-urea, N,N-dichloroazo-dicarbonamide, N-chloroacetyl-urea,N,N-dichlorbiurile,chlorinated dicyandiamide.

Suitable liquid biocides that can be used in the device of the invention include aqueous solutions of sodium hypochlorite, sodium dichloro-isocyanuric acid, iodine, quaternary ammonium compounds or gluteraldehyde. Most preferred liquid biocide is an aqueous solution of sodium hypochlorite. When sodium hypochlorite is the liquid biocide used, it is added in the biocide storage compartment at a concentration in the range of 0.01 to 50 weight %, more preferably in the range of 1 to 20 weight % in water. With the use of the device of the invention, it is possible to get the concentration of the biocide in the water purification chamber in the range of 0.5 to 100 ppm by weight, more preferably in the range of 1 to 50 ppm by weight in water.

The filter cum biocide scavenger preferably comprises an activated carbon block filter media. The activated carbon block filter media comprises powder activated carbon (PAC) and a binder which are well mixed and made into a block by pressure and heat treatment. The PAC is preferably selected from bituminous coal, coconut shell/wood charcoal, petroleum tar. Preferably, the PAC used has size uniformity co-efficient of less than 2, or more preferably less than 1.5, a carbon tetrachloride number exceeding 50%, more preferably exceeding 60%.

The filter cum biocide scavenger is further provided with a particulate filter that is a single or multi-layered non-woven fibrous-fabric filter wherein the outermost layer is pleated. The filter could alternately comprise of a combination of a pleated and spirally wound fabric filter. Particularly preferred carbon block filter media are those disclosed in GB2390987, more preferably that disclosed in our co-pending application 320/MUM/2004. The co-pending application describes a carbon block filter media for use in gravity fed filters comprising powder activated carbon (PAC) having a particle size such that 95 wt% of the particles pass through 50 mesh (0,297 mm) and not more than 12% passes through 200 mesh (0,075 mm) and a binder material having a Melt Flow Rate (MFR) of less than 5. Further preferred carbon block filter media has 55 to 80 wt % of the PAC particles in the particle size range of 100 to 200 mesh (0,075 mm to 0,152 mm) in the lower 50 volume% of the carbon block filter media.

The discharge mechanism may be a tap or a bellow actuated hand pump discussed later.

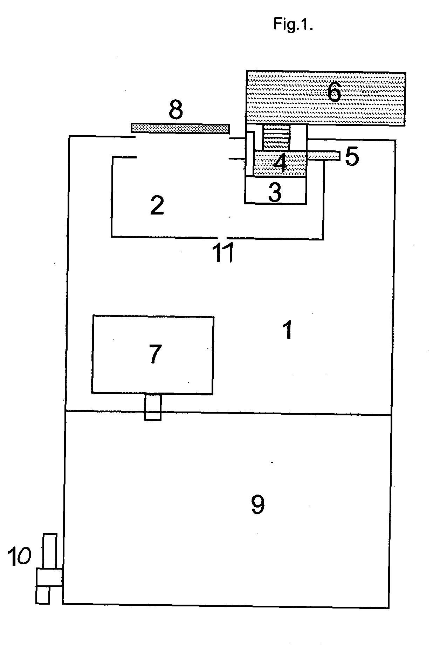

The invention will now be illustrated with help a specific non-limiting example of a water purification device according to the invention in Figures 1-4.

### Detailed Description of the figures:

Figure 1 is an embodiment of the water purification device according to the invention. The device has a water purification chamber (1) comprising a fill cup (2) which is provided with a small porthole (11) preferably at the bottom of the fill cup to ensure that the water in the fill cup is drained out over extended time. The aperture of the porthole is substantially smaller than the inlet port of the fill cup which will ensure that the rate at which water is drained from the fill cup through the port is significantly slower than the rate at which the cup can be filled by the user. The water purification chamber is provided with a cover (8) opening which will allow the user to pour water into the fill cup as it is positioned at the top end of the water purification chamber. The inlet port of the water purification chamber to receive input water is in line with the inlet port of the fill cup such that substantially all the input water flows into the fill cup. It is also designed such that filling in the fill cup allows water to overflow into the water purification chamber. There is a tube (3) connecting the fill cup and biocide dispensing box (4) that is in fluid communication with biocide storage compartment (6) and a biocide dispensing port (5). Below the water purification chamber is provided a pure water discharge chamber (9) to receive the purified water. The input water in the water purification chamber after being treated with a biocide passes through a filter-cum-biocide scavenger (7) into the pure water discharge chamber. The filter is positioned on the partition wall that separates the water purification chamber and the pure water discharge chamber. The filter helps in removing the residual biocide, organics, any suspended dirt and particulate matter and residual micro-organisms. The purified water can be discharged from the pure water discharge chamber by a discharge mechanism (10). The discharge mechanism is a tap attached to the lower end of the pure water discharge chamber.

When water flows into the fill cup through the inlet port of the water purification chamber and fills up the same, the level of water in fill cup creates an air pressure in the tube and enables the discharge of the biocide from the biocide dispensing box into the water purification chamber through the biocide dispensing port.

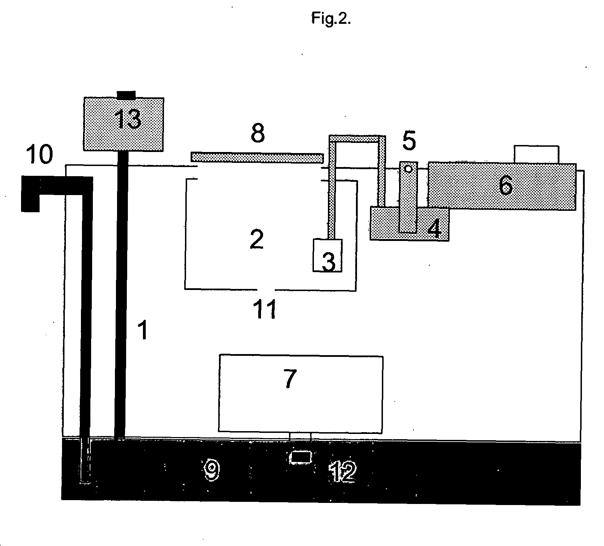

Figure 2 is another embodiment of the water purification device according to the invention. The water purification chamber (1) is provided with a lid which has an inlet port vertically above the fill-cup such that water that is poured in flows into the fill cup (2) and later fills the water purification chamber. As the water level rises in the fill cup an air pocket is formed in the tube (3) and when the water level reaches the top of 2, the air pressure in the tube is enough to dispense a few drops of the liquid biocide from the biocide dispensing port (5) into the water purification chamber (1). Further addition of water into fill cup causes the water purification chamber to fill up, due to overflow, which also results in the uniform mixing of the liquid biocide throughout water purification chamber. After the mixing of biocide with the water, there is provided a filter-cum-biocide scavenger (7). Water from water purification chamber will pass through this scavenger and accumulate in pure water discharge chamber (9). Figure 2 provides a different dispensing device as compared to figure 1. Section (13) in the figure is connected to the pure water discharge chamber by means of a tube. Section (13) comprises of a non-return valve and a bellow. By pressing the bellow one can dispense the pure water from elevated dispensing tap (10). The elevated discharge point has several in-use advantages one of which is that the device need not be placed at the edge of a platform. At the time of pressing the bellow there will be a creation of pressure in the pure water discharge chamber as a result of which, water from the pure water chamber may go back to the water purification chamber (1) through the filter. To prevent this there is provided a non return valve (12) at the foot of the filter-cum-biocide scavenger (7). Due to this non-return valve the pressure created by pumping the bellow will help to dispense the water from elevated dispensing tap.

The biocide storage compartment has an opening through which the biocide can be replaced. When a liquid biocide is used, filling of the biocide storage compartment leads to the filling up of the biocide dispensing box. Alternately the biocide storage compartment could be a replaceable air-tight "bottle" which is in fluid communication with the biocide dispensing box like a closed inverted bottle over a liquid reservoir. This ensures discharge of the liquid biocide from the storage "bottle" only when the level of the biocide in the biocide dispensing box falls below the level of the lowest part of the inverted biocide storage "bottle".

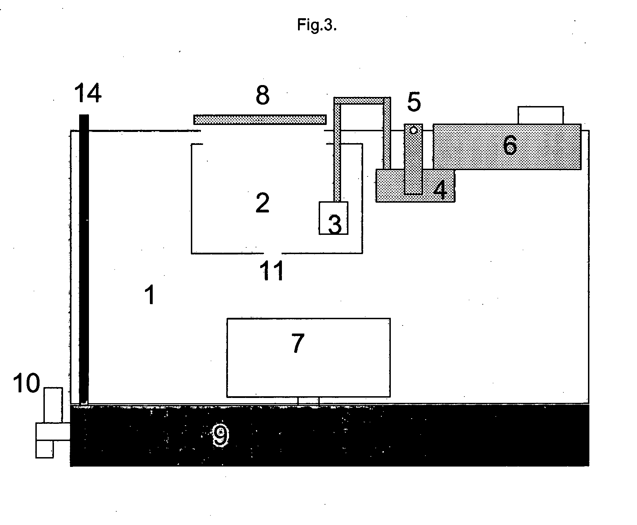

Figure 3 represents another preferred embodiment of the water purifier. The water purification chamber (1), the fill cup (2), the filter-cum-biocide scavenger (7), the biocide dispensing port (5), the biocide dispensing box (4), the pure water discharge chamber (9) everything remains same as in figure 2. In Figure 3 there is no non return valve at the foot of the filter-cum-scavenger as there is no bellow in the section 14. Section 14 only has a vent which is connected to the pure water discharge chamber. By opening the vent one can discharge the water from the tap (10). The opening of the air vent is either manually operated or actuated by a timer. The vent (14) is provided to control the residence time of water in the water purification chamber which has the biocide. By controlling the residence time one may get the desired level of purity of water.

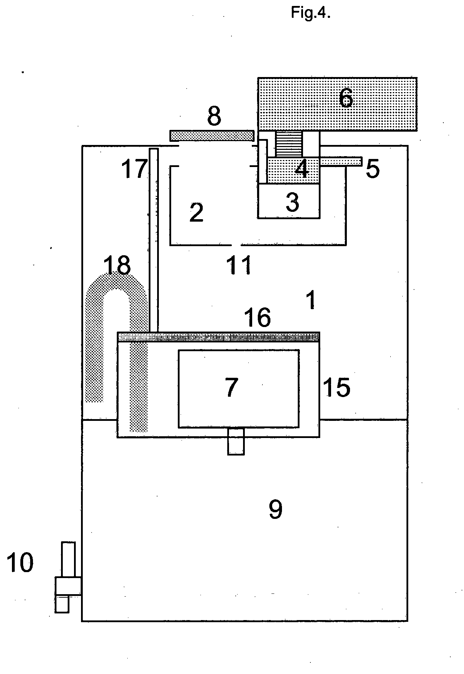

Figure 4 represents another embodiment of the water purification device showing a water purification chamber (1) provided at its bottom inner section a filter chamber (15) that encloses the filter-cum-biocide scavenger (7). The filter chamber is provided with a water-tight cover (16) and an air vent (17). A siphon discharge mechanism (18) is provided to operatively connect the water purification chamber and the filter chamber such that the water from the water purification chamber flows into the filter chamber only through the siphon discharge mechanism.
The air vent allows the siphon discharge mechanism to operate by allowing an upwardly directed passage for air to exit the filter chamber.
The exit from the filter chamber is through the filter-cum-biocide scavenger, while the entry of water into the filter chamber occurs through the siphon discharge mechanism. The water tight cover ensures that water enters the filter Chamber only through the siphon. As the water purification chamber (1) fills-up to the highest level of the siphon, the siphon begins to discharge water into the filter chamber. As the water with biocide fills the filter chamber, water flows through the filter cum scavenger which removes colloidal impurities from the water as well as the residual biocide, and discharges water into the pure water discharge chamber (9), Pure water devoid of biocide is available from pure water discharge chamber, through a dispensing means such as a tap (10).

Water is poured into the fill cup (2), in order to fill the device. The device cover (8) has an opening vertically above the fill-cup such that it would be obvious to the user that water has to be filled in through it.

As the water level rises in the fill cup, an air pocket is formed in the tube (3). This pressure is transmitted into dispensing box (4). When the water level reaches the top of fill cup, the air pressure in the air pocket is enough to dispense a few drops of the liquid biocide out of biocide dispensing box, through the biocide dispensing port (5) into the water purification chamber (1). Further addition of water into the fill cup causes the water purification chamber to fill up, due to overflow, which also results in the uniform mixing of the liquid biocide throughout the water purification chamber.

The biocide dispensing box is in fluid communication with a biocide storage compartment (6) such that the liquid biocide in biocide storage compartment is prevented from flowing out by vacuum. There is a small opening at the bottom of fill up, which is provided to ensure that fill cup gets drained out over time. The drain rate of the hole at the bottom of fill cup ensures that the drain rate is significantly slower than the rate at which the cup can be filled by the user. It also ensures that the air pocket forms during the next re-fill thereby ensuring smooth operation over several litters of water.

### Examples:

### Example 1

### i. Test water:

A test water having TDS of 1000ppm and the TSS of 15 ppm was used for testing the efficacy of the water purification device as described in Figure 4 of the present invention.

### ii. Evaluation of microbial safety.

To five liters of Test water described in Table 1, a culture of *E. coli* ATCC 10536 stock and MS2 bacteriophage stock was added to obtain a Log₁₀ (input count per 100 ml): 7.25 log of *E.coli* and 5.96 log of MS2. This water was passed through the device and out put water was collected after passing 100 ml (Sample 1) and 3 L (Sample 2) and the samples were tested using standard Sterile MacConkey's Agar Medium for *E.coli* and ATCC Medium #271: *Escherichia* Medium along with a suitable host for MS2. The data is presented in Table 2.

**Table 2**

| Organism | Sample Number | Log Reduction |
|---|---|---|
| *E.coli* | | |
| | Sample 1 | 7.25 |
| | Sample 2 | 7.25 |
| MS2 | | |
| | Sample 1 | 5.96 |
| | Sample 2 | 5.96 |

The above data show that the device was effective in removing microorganisms and purifying the water to levels suitable for drinking purposes.

It will be appreciated that the water purification device according to the present invention is less complex with reduced number of replaceable parts and thus making it economical in its construction.

## Claims

1. A water purification device comprising:
a water purification chamber (1) and
a biocide dispensing box (4) that is in fluid communication with a biocide storage compartment (6) and a biocide dispensing port (5) opening into the purification chamber (1);
wherein the water purification chamber (1) is in fluid communication through a filter (7) with a pure water discharge chamber (9)
comprising a water discharge mechanism (10), and
**CHARACTERISED IN THAT**
• the purification chamber (1) comprises a fill cup (2) provided with an inlet port and with a porthole (11), whereby the fill cup (2) is positioned at the top end of the water purification chamber (1), and is in fluid communication through the porthole (11) with the water purification chamber (1);
• the device also comprises a vertical tube (3) connecting the fill cup (2) and the biocide dispensing box (4);
and wherein the vertical tube (3) and the biocide dispensing box (4) are connected such that a positive air pressure, created in the tube (3) when in operation, causes biocide to be dispensed from the biocide dispensing box (4) through the biocide dispensing port (5) into the water purification chamber (1).

2. A water purification device as claimed in claim 1 wherein the water purification chamber (1) is provided with an inlet port (8) adapted to receive input water, wherein the inlet port (8) is vertically in line with the inlet port of the fill cup (2), such that upon operation substantially all the input water flows into the fill cup (2).

3. A water purification device as claimed in claim 1 or 2 wherein the aperture of the porthole (11) of the fill cup (2) is substantially smaller than the inlet port of the fill cup (2).

4. A water purification device as claimed in any one of the preceding claims wherein the filter (7) is encased in a filter chamber (15) comprising an air vent (17).

5. A water purification device as claimed in claim 4 wherein the water purification chamber (1) is operatively connected with the filter chamber (15) through a siphon discharge mechanism (18), wherein the inlet port of the siphon communicates with the water purification chamber (1), the outlet port of the siphon communicates with the filter chamber (15) and whereby said inlet port is situated at a higher level in vertical direction than said outlet port, such that when in operation, the water from the water purification chamber (1) flows into the filter chamber (15) through the siphon discharge mechanism (18).

6. A water purification device as claimed in any one of the preceding claims wherein the filter (7) comprises an activated carbon block filter media.

7. A water purification device as claimed in any one of the preceding claims wherein the filter (7) comprises a single or multiple layers of pleated or non-pleated fabric filter, where the fabric comprises of nonwoven polymeric fibres.

8. A water purification device as claimed in any one of the preceding claims wherein the filter (7) is a composite filter having layers of non-woven fabric and bound activated carbon element.

9. A water purification device as claimed in any one of the preceding claims, wherein the biocide storage compartment is a replaceable air-tight inverted "bottle" which is in fluid communication with the biocide dispensing box.

10. A process for purification of water by a device as claimed in claim 1, comprising:
i. filling water into the fill cup (2) with the porthole (11) to create an air pressure in the vertical tube (3);
ii. discharging liquid biocide from the biocide dispensing box (4) through the biocide dispensing port (5) into the water purification chamber (1);
such that the water from the water purification chamber (1) after passing through the filter (7) collects in the pure water discharge chamber (9).

11. A process for purification of water as claimed in claim 10, wherein during step (i) an air pocket is formed in the vertical tube (3).

12. A process for purification of water as claimed in claims 10 or 11, wherein the liquid biocide in the biocide storage compartment (6) is prevented from flowing by vacuum.

13. A process for purification of water as claimed in any one of claims 10 to 12, wherein the biocide storage compartment (6) is a replaceable air-tight inverted "bottle" which is in fluid communication with the biocide dispensing box (4), whereby the liquid biocide is discharged from the biocide storage compartment (6) only when the level of the biocide in the biocide dispensing box (4) falls below the level of the lowest part of the inverted biocide storage compartment (6).

## Patentansprüche

1. Wasseraufbereitungsvorrichtung,
die Folgendes aufweist:
eine Wasseraufbereitungskammer (1) und
einen Behälter (4) zum Verteilen von Biozid, der in Fluidverbindung mit einer Kammer (6) zum Speichern von Biozid und einer Öffnung (5) zum Verteilen von Biozid steht, die in die Aufbereitungskammer (1) führt;
wobei die Wasseraufbereitungskammer (1) durch einen Filter (7) in Fluidverbindung mit einer Kammer (9) zum Abgeben von reinem Wasser steht,
die einen Wasserabgabemechanismus (10) aufweist; und
**dadurch gekennzeichnet, dass**
• die Aufbereitungskammer (1) ein Einfüllgefäß (2) aufweist, das mit einer Einlassöffnung und mit einem Auslass (11) versehen ist, wobei sich das Einfüllgefäß (2) am oberen Ende der Wasseraufbereitungskammer (1) befindet und durch den Auslass (11) in Fluidverbindung mit der Wasseraufbereitungskammer (1) steht;
• die Vorrichtung auch ein senkrechtes Rohr (3) aufweist, das das Einfüllgefäß (2) und den Behälter (4) zum Verteilen von Biozid miteinander verbindet;
und wobei das senkrechte Rohr (3) und der Behälter (4) zum Verteilen von Biozid so verbunden sind, dass ein Luftüberdruck, der beim Betrieb im Rohr (3) entsteht, dazu führt, dass das Biozid durch die Öffnung (5) zum Verteilen von Biozid aus dem Behälter (4) zum Verteilen von Biozid in die Wasseraufbereitungskammer (1) verteilt wird.

2. Wasseraufbereitungsvorrichtung nach Anspruch 1,
wobei die Wasseraufbereitungskammer (1) mit einer Einlassöffnung (8) versehen ist, die der Aufnahme von zugeführtem Wasser dient, wobei die Einlassöffnung (8) senkrecht in einer Reihe mit der Einlassöffnung des Einfüllgefäßes (2) liegt, so dass während des Betriebs im Wesentlichen das gesamte zugeführte Wasser in das Einfüllgefäß (2) fließt.

3. Wasseraufbereitungsvorrichtung nach Anspruch 1 oder 2,
wobei die Öffnung des Auslasses (11) des Einfüllgefäßes (2) wesentlich kleiner als die Einlassöffnung des Einfüllgefäßes (2) ist.

4. Wasseraufbereitungsvorrichtung nach einem der vorstehenden Ansprüche,
wobei der Filter (7) in einer Filterkammer (15) enthalten ist, die eine Entlüftungsöffnung (17) aufweist.

5. Wasseraufbereitungsvorrichtung nach Anspruch 4,
wobei die Wasseraufbereitungskammer (1) durch einen Abgabemechanismus (18) in Form eines Siphons wirksam mit der Filterkammer (15) verbunden ist, wobei die Einlassöffnung des Siphons mit der Wasseraufbereitungskammer (1) in Verbindung steht, die Auslassöffnung des Siphons mit der Filterkammer (15) in Verbindung steht und wobei sich die Einlassöffnung in senkrechter Richtung weiter oben als die Auslassöffnung befindet, so dass beim Betrieb das Wasser aus der Wasseraufbereitungskammer (1) durch den Abgabemechanismus (18) in Form des Siphons in die Filterkammer (15) fließt.

6. Wasseraufbereitungsvorrichtung nach einem der vorstehenden Ansprüche,
wobei der Filter (7) ein Filtermedium aus einem Aktivkohleblock aufweist.

7. Wasseraufbereitungsvorrichtung nach einem der vorstehenden Ansprüche,
wobei der Filter (7) eine einzelne oder mehrere Schichten eines gefalteten oder nicht gefalteten Filtertuchs aufweist, wobei das Tuch ungewebte Polymerfasern aufweist.

8. Wasseraufbereitungsvorrichtung nach einem der vorstehenden Ansprüche,
wobei der Filter (7) ein Mehrschichtfilter mit Schichten aus Vlies und einem gebundenen Aktivkohleelement aufweist.

9. Wasseraufbereitungsvorrichtung nach einem der vorstehenden Ansprüche,
wobei die Kammer zum Speichern von Biozid eine austauschbare, luftdichte, umgekehrte "Flasche" ist, die in Fluidverbindung mit dem Behälter zum Verteilen von Biozid steht.

10. Verfahren zum Aufbereiten von Wasser durch eine Vorrichtung nach Anspruch 1, das Folgendes aufweist:
i. Einfüllen von Wasser in das Einfüllgefäß (2) mit dem Auslass (11), um im senkrechten Rohr (3) einen Luftdruck zu erzeugen;
ii. Abgeben des flüssigen Biozids aus dem Behälter (4) zum Verteilen von Biozid durch die Öffnung (5) zum Verteilen von Biozid in die Wasseraufbereitungskammer (1);
so dass sich das Wasser aus der Wasseraufbereitungskammer (1) nach dem Durchströmen des Filters (7) in der Kammer (9) zum Abgeben von reinem Wasser sammelt.

11. Verfahren zum Aufbereiten von Wasser nach Anspruch 10,
wobei sich während des Schrittes (i) im senkrechten Rohr (3) eine Lufttasche bildet.

12. Verfahren zum Aufbereiten von Wasser nach Anspruch 10 oder 11,
wobei das flüssige Biozid in der Kammer (6) zum Speichern von Biozid durch ein Vakuum am Fließen gehindert wird.

13. Verfahren zum Aufbereiten von Wasser nach einem der Ansprüche 10 bis 12,
wobei die Kammer (6) zum Speichern von Biozid eine austauschbare, luftdichte, umgekehrte "Flasche" ist, die in Fluidverbindung mit dem Behälter (4) zum Verteilen von Biozid steht, wobei das flüssige Biozid nur dann aus der Kammer (6) zum Speichern von Biozid abgegeben wird, wenn das Niveau des Biozids im Behälter (4) zum Verteilen von Biozid unter das Niveau des untersten Teils der umgekehrten Kammer (6) zum Speichern von Biozid sinkt.

## Revendications

1. Dispositif de purification d'eau comprenant :
une chambre de purification d'eau (1), et
une boîte de distribution de biocide (4) qui est en communication de fluide avec un compartiment de stockage de biocide (6) et un orifice de distribution de biocide (5) s'ouvrant dans la chambre de purification (1) ;
dans lequel la chambre de purification d'eau (1) est en communication de fluide par le biais d'un filtre (7) avec une chambre de décharge d'eau pure (9) comprenant un mécanisme de décharge d'eau (10), et
**caractérisé en ce que** :
la chambre de purification (1) comprend une coupelle de remplissage (2) prévue avec un orifice d'entrée et avec un hublot (11), moyennant quoi la coupelle de remplissage (2) est positionnée au niveau de l'extrémité supérieure de la chambre de purification d'eau (1) et est en communication de fluide par le biais du hublot (11) avec la chambre de purification d'eau (1) ;
le dispositif comprend également un tube vertical (3) raccordant la coupelle de remplissage (2) et la boîte de distribution de biocide (4) ;
et dans lequel le tube vertical (3) et la boîte de distribution de biocide (4) sont raccordés de sorte qu'une pression d'air positive, créée dans le tube (3) lorsqu'il est en fonctionnement, amène le biocide à être distribué à partir de la boîte de distribution de biocide (4) en passant par l'orifice de distribution de biocide (5) dans la chambre de purification d'eau (1).

2. Dispositif de purification d'eau selon la revendication 1, dans lequel la chambre de purification d'eau (1) est prévue avec un orifice d'entrée (8) adapté pour recevoir l'eau d'entrée, dans lequel l'orifice d'entrée (8) est verticalement aligné avec l'orifice d'entrée de la coupelle de remplissage (2), de sorte que suite au fonctionnement, sensiblement toute l'eau d'entrée s'écoule dans la coupelle de remplissage (2).

3. Dispositif de purification d'eau selon la revendication 1 ou 2, dans lequel l'ouverture du hublot (11) de la coupelle de remplissage (2) est sensiblement plus petite que l'orifice d'entrée de la coupelle de remplissage (2).

4. Dispositif de purification d'eau selon l'une quelconque des revendications précédentes, dans lequel le filtre (7) est enfermé dans une chambre de filtre (15) comprenant une prise d'air (17).

5. Dispositif de purification d'eau selon la revendication 4, dans lequel la chambre de purification d'eau (1) est raccordée de manière opérationnelle à la chambre de filtre (15) par le biais d'un mécanisme de décharge de siphon (18), dans lequel l'orifice d'entrée du siphon communique avec la chambre de purification d'eau (1), l'orifice de sortie du siphon communique avec la chambre de filtre (15) et moyennant quoi ledit orifice d'entrée est situé à un niveau plus élevé dans la direction verticale que ledit orifice de sortie, de sorte que lorsqu'il est en fonctionnement, l'eau provenant de la chambre de purification d'eau (1) s'écoule dans la chambre de filtre (15) par le mécanisme de décharge de siphon (18).

6. Dispositif de purification d'eau selon l'une quelconque des revendications précédentes, dans lequel le filtre (7) comprend une couche filtrante de bloc de charbon actif.

7. Dispositif de purification d'eau selon l'une quelconque des revendications précédentes, dans lequel le filtre (7) comprend une seule ou plusieurs couches de filtre en tissu plissé ou non plissé, où le tissu se compose de fibres polymères non tissées.

8. Dispositif de purification d'eau selon l'une quelconque des revendications précédentes, dans lequel le filtre (7) est un filtre composite ayant des couches de tissu non tissé et un élément de charbon actif lié.

9. Dispositif de purification d'eau selon l'une quelconque des revendications précédentes, dans lequel le compartiment de stockage de biocide est une "bouteille" inversée étanche à l'air remplaçable qui est en communication de fluide avec la boîte de distribution de biocide.

10. Procédé pour purifier de l'eau avec un dispositif selon la revendication 1, comprenant les étapes consistant à :
i. verser l'eau dans la coupelle de remplissage (2) avec le hublot (11) pour créer une pression d'air dans le tube vertical (3) ;
ii. décharger le biocide liquide de la boîte de décharge de biocide (4) par l'orifice de distribution de biocide (5) dans la chambre de purification d'eau (1) ;
de sorte que l'eau provenant de la chambre de purification d'eau (1), après être passée par le filtre (7), s'accumule dans la chambre de décharge d'eau pure (9).

11. Procédé pour purifier l'eau selon la revendication 10, dans lequel pendant l'étape (i), une poche d'air est formée dans le tube vertical (3).

12. Procédé pour purifier l'eau selon les revendications 10 ou 11, dans lequel on empêche l'écoulement du biocide liquide dans le compartiment de stockage de biocide (6), par vide.

13. Procédé pour purifier l'eau selon l'une quelconque des revendications 10 à 12, dans lequel le compartiment de stockage de biocide (6) est une "bouteille" inversée étanche à l'air remplaçable qui est en communication de fluide avec la boîte de distribution de biocide (4), moyennant quoi le biocide liquide est déchargé du compartiment de stockage de biocide (6) uniquement lorsque le niveau de biocide dans la boîte de distribution de biocide (4) chute au-dessous du niveau de la partie la plus basse du compartiment de stockage de biocide inversé (6).
